# EUROPEAN PATENT APPLICATION

(11) **EP 4 761 088 A1**
(43) Date of publication of application: **17.06.2026**
(21) Application number: 25215515.5
(22) Date of filing: 13.11.2025
(51) Int. Cl.: H02M 3/158

(54) **POLARITY-REVERSING BUCK CONVERTER CIRCUITS AND WELDING-TYPE POWER SUPPLIES HAVING POLARITY-REVERSING BUCK CONVERTER CIRCUITS**

(30) Priority: 02.12.2024 US 202418964835
(71) Applicant: Illinois Tool Works Inc., Glenview IL 60025 (US)
(72) Inventor: JANQUART, Benjamin, Glenview, 60025 (US); ROMENESKO, Charles James, Glenview, 60025 (US)
(74) Representative: HGF

(57) **Abstract**

Disclosed example polarity reversing buck converter circuit include: a first bus node configured to receive a first DC voltage a second bus node; first and second output terminals; a first switching device configured to selectively couple the first output terminal to the first bus node; a second switching device configured to selectively couple the first output terminal to the second bus node; a third switching device configured to selectively couple the second output terminal to the first bus node; a fourth switching device configured to selectively couple the second output terminal to the second bus node; and control circuitry configured to: control the third and fourth switching devices to couple the second output terminal to the first or the second bus node, based on a selected output polarity; and based on the selected polarity, control the first and second switching devices to perform DC-DC conversion.

## Description

### FIELD OF THE DISCLOSURE

This disclosure relates generally to welding systems and, more particularly, to polarity-reversing buck converter circuits and welding-type power supplies having polarity-reversing buck converter circuits.

### BACKGROUND

Different welding processes require different electrode polarity configurations. Some processes involve electrode positive polarity, in which current flows out of the electrode. Other weld processes involve using electrode negative polarity, in which current flows into the electrode. When switching processes, the operator manually changes the physical configuration of the welding system to accommodate the change in process.

### SUMMARY

Polarity-reversing buck converter circuits and welding-type power supplies having polarity-reversing buck converter circuits are disclosed, substantially as illustrated by and described in connection with at least one of the figures, as set forth more completely in the claims.

### BRIEF DESCRIPTION OF THE DRAWINGS

FIG. 1 illustrates an example welding system, in accordance with aspects of this disclosure;
FIG. 2 is a schematic diagram of an example polarity-reversing buck converter, which may be used to implement the power conversion circuitry of FIG. 1.
FIG. 3A is a schematic diagram of the example polarity-reversing buck converter of FIG. 2 in a first output polarity configuration.
FIG. 3B is a schematic diagram of the example polarity-reversing buck converter of FIG. 2 in a second output polarity configuration.
FIG. 4 is a schematic diagram of another example polarity-reversing buck converter, which may be used to implement the power conversion circuitry of FIG. 1.

The figures are not necessarily to scale. Where appropriate, similar or identical reference numbers are used to refer to similar or identical components.

### DETAILED DESCRIPTION

Polarity-reversing power supplies can be configured to automatically change between polarities. Conventional polarity-reversing power supplies use four contactors to swap between electrode positive and electrode negative polarities, and/or separate output stages to control the polarity.

Disclosed example polarity-reversing buck converters and welding-type power supplies provide both polarity control and power conversion to provide a DC welding-type output that can be automatically controlled. Compared with conventional polarity-reversing power supplies, disclosed example polarity-reversing buck converters and power supplies have lower component costs due to the reduction in the number of high-cost contactors.

As used herein, the term "electrode" includes any consumable or non-consumable material which may be controllably provided to a welding torch by welding equipment and which may conduct a weld current (e.g., welding wire).

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "weld voltage setpoint" refers to a voltage input to the power converter via a user interface, network communication, weld procedure specification, or other selection method. As used herein, a "weld current setpoint" refers to a current input to the power converter via a user interface, network communication, weld procedure specification, or other selection method.

As utilized herein the terms "circuits" and "circuitry" refer to physical electronic components (i.e. hardware) and any software and/or firmware ("code") which may configure the hardware, be executed by the hardware, and/or otherwise be associated with the hardware. As used herein, for example, a "circuit" may comprise any analog and/or digital components, power and/or control elements, such as a microprocessor, digital signal processor (DSP), software, and the like, discrete and/or integrated components, or portions and/or combinations thereof. As used herein, for example, a particular processor and memory may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

Features described herein make reference to the accompanying drawings in which exemplary embodiments of the disclosure are shown. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. While various features, elements or steps of particular embodiments can be disclosed using the transitional phrase "comprising," it is to be understood that alternative embodiments, including those that can be described using the transitional phrases "consisting" or "consisting essentially of," are implied. Thus, for example, implied alternative embodiments to an apparatus that comprises A+B+C include embodiments where an apparatus consists of A+B+C and embodiments where an apparatus consists essentially of A+B+C.

According to aspects of this disclosure, example polarity reversing buck converter circuits include: a first bus node and a second bus node, the first bus node configured to receive a first DC voltage with respect to the second bus node; a first output terminal and a second output terminal; a first switching device configured to selectively couple the first output terminal to the first bus node; a second switching device configured to selectively couple the first output terminal to the second bus node; a third switching device configured to selectively couple the second output terminal to the first bus node; a fourth switching device configured to selectively couple the second output terminal to the second bus node, each of the third switching device and the fourth switching device comprising a contactor, a relay, or a mechanical switch; and control circuitry configured to: control the third switching device and the fourth switching device to couple the second output terminal to one of the first bus node or the second bus node, based on a selected output polarity for the first output terminal and the second output terminal; and based on the selected output polarity, control the first switching device and the second switching device to perform DC-DC conversion to convert the first DC voltage to a second DC voltage and output the second DC voltage as positive or negative at the first output terminal relative to the second output terminal.

Some example polarity reversing buck converter circuits further include a rectifier configured to convert an AC input to supply the first DC voltage to the DC bus. In some example polarity reversing buck converter circuits, the first switching device and the second switching device each include a transistor. Some example polarity reversing buck converter circuits further include an inductor coupled between the first and second switching devices and the first output terminal.

In some example polarity reversing buck converter circuits, the control circuitry is configured to control the first output terminal to be a negative voltage with respect to the second output terminal by: controlling the third switching device to couple the second output terminal to the first bus node; controlling the fourth switching device to be open; and controlling the second switching device to drive an output of the buck converter circuit. In some example polarity reversing buck converter circuits, the control circuitry is configured to control the first switching device to provide synchronous rectification.

In some example polarity reversing buck converter circuits, the control circuitry is configured to control the first output terminal to be a positive voltage with respect to the second output terminal by: controlling the fourth switching device to couple the second output terminal to the second bus node; controlling the third switching device to be open; and controlling the first switching device to drive an output of the buck converter circuit. In some example polarity reversing buck converter circuits, the control circuitry is configured to control the second switching device to provide synchronous rectification.

According to aspects of this disclosure, some example welding-type power supplies include: a first welding-type output terminal and a second welding-type output terminal; and a polarity reversing buck converter circuit configured to convert input power to output welding-type power to the first welding-type output terminal and the second welding-type output terminal, and to control a polarity of the first welding-type output terminal with respect to the second welding-type output terminal, the buck converter circuit including: a first bus node and a second bus node, the first bus node configured to receive a first DC voltage with respect to the second bus node; a first switching device configured to selectively couple the first welding-type output terminal to the first bus node; a second switching device configured to selectively couple the first welding-type output terminal to the second bus node; a third switching device configured to selectively couple the second welding-type output terminal to the first bus node; a fourth switching device configured to selectively couple the second welding-type output terminal to the second bus node, each of the third switching device and the fourth switching device comprising a contactor, a relay, or a mechanical switch; and control circuitry configured to: control the third switching device and the fourth switching device to couple the second welding-type output terminal to one of the first bus node or the second bus node, based on a selected output polarity for the first welding-type output terminal and the second welding-type output terminal; and based on the selected output polarity, control the first switching device and the second switching device to perform DC-DC conversion to convert the first DC voltage to a second DC voltage and output the second DC voltage as positive or negative at the first welding-type output terminal relative to the second welding-type output terminal.

In some example welding-type power supplies, the control circuitry is configured to automatically select the polarity based on an input representative of a welding-type process. Some example welding-type power supplies further include an energy storage device configured to supply DC power to the DC bus. Some example welding-type power supplies further include a boost circuit configured to selectively convert a voltage of the DC power from the energy storage device to the first DC voltage. Some example welding-type power supplies further include a rectifier configured to convert an AC input to supply the first DC voltage to the DC bus.

In some example welding-type power supplies, the rectifier is configured to receive the AC input from a single-phase or three-phase mains supply. Some example welding-type power supplies further include an engine and a generator configured to supply the AC input to the rectifier. In some example welding-type power supplies, the control circuitry is configured to control the first welding-type output terminal to be a positive voltage with respect to the second welding-type output terminal by: controlling the fourth switching device to couple the second welding-type output terminal to the second bus node; controlling the third switching device to be open; and controlling the first switching device to drive an output of the buck converter circuit.

In some example welding-type power supplies, the control circuitry is configured to control the first welding-type output terminal to be a negative voltage with respect to the second welding-type output terminal by: controlling the third switching device to couple the second output terminal to the first bus node; controlling the fourth switching device to be open; and controlling the second switching device to drive an output of the buck converter circuit.

In some example welding-type power supplies, the first switching device and the second switching device each comprise a transistor. In some example welding-type power supplies, the third switching device and the fourth switching device each comprise a contactor.

According to aspects of this disclosure, example polarity reversing buck converter circuits include: a first bus node and a second bus node, the first bus node configured to receive a first DC voltage with respect to the second bus node; a first output terminal and a second output terminal; a first switching device configured to selectively couple the first output terminal to the first bus node; a second switching device configured to selectively couple the first output terminal to the second bus node; a relay configured to selectively couple the second output terminal to the first bus node or the second bus node; and control circuitry configured to: control the relay to couple the second output terminal to one of the first bus node or the second bus node, based on a selected output polarity for the first output terminal and the second output terminal; and based on the selected output polarity, control the first switching device and the second switching device to perform DC-DC conversion to convert the first DC voltage to a second DC voltage and output the second DC voltage as positive or negative at the first output terminal relative to the second welding-type output terminal.

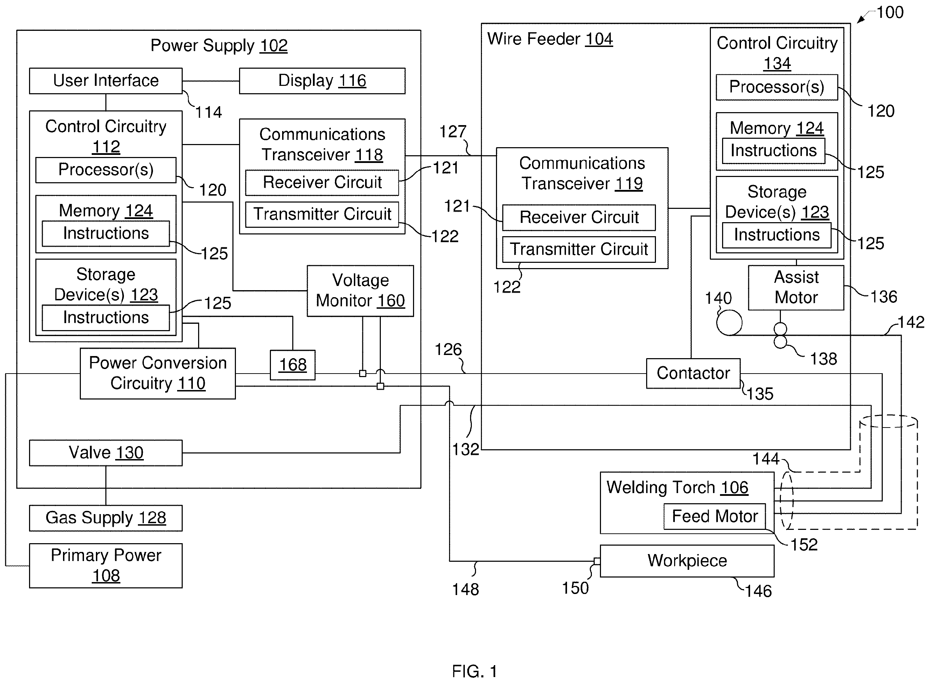

Turning now to the drawings, FIG. 1 is a block diagram of an example welding system 100 having a power supply 102, a wire feeder 104, and a welding torch 106. The welding system 100 powers, controls, and supplies consumables (e.g., an electrode) to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example welding system 100 of FIG. 1 includes a wire feeder 104 (e.g., for GMAW or FCAW operations), the wire feeder 104 may be replaced by any other type of remote accessory device, such as a stick welding and/or TIG welding remote control interface that provides stick and/or TIG welding.

The power supply 102 receives primary power 108 (e.g., from an AC power grid, an engine/generator set, a battery, or other energy generating or storage devices, or a combination thereof), conditions the primary power 108, and provides an output power to one or more welding devices in accordance with demands of the welding system 100. The primary power 108 may be supplied from an offsite location (e.g., the primary power 108 may originate from the power grid). The power supply 102 includes power conversion circuitry 110, which may include transformers, rectifiers, switches, and so forth, capable of converting the AC input power to AC and/or DC output power as dictated by the demands of the welding system 100 (e.g., particular welding processes and regimes).

The power conversion circuitry 110 can convert input power (e.g., the primary power 108) to welding power based on a weld voltage setpoint and/or a weld current setpoint and output the welding power via a weld circuit. In some examples, the power conversion circuitry 110 is configured to convert the primary power 108 to both welding power and one or more auxiliary power outputs. In some examples, the power conversion circuitry 110 can convert input power (e.g., the primary power 108) to a touch detection signal based on a touch detection voltage setpoint and/or a touch detection current setpoint and output the touch detection signal via the weld circuit. In some examples, the power conversion circuitry 110 can convert input power (e.g., the primary power 108) to an arc-starting power based on an arc-starting voltage setpoint and/or an arc-starting current setpoint and output the arc-starting power via the weld circuit. In other examples, the power conversion circuitry 110 is adapted to convert input power only to a welding power output.

The power supply 102 includes control circuitry 112 to control the operation of the power supply 102. The power supply 102 also includes a user interface 114. The control circuitry 112, which is also referred to as a "controller," receives input from the user interface 114, through which a user may choose a process and/or input desired parameters (e.g., voltages, currents, setpoints, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the welding system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via a communications transceiver 118, as described below.

The control circuitry 112 includes at least one controller or processor 120 that controls the operations of the power supply 102. The control circuitry 112 receives and processes multiple inputs associated with the performance and demands of the welding system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage, one or more nontransitory computer-readable medium(s)) may include ROM, flash memory, a hard drive, and/or any other suitable optical, magnetic, and/or solid-state storage medium(s), and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch (e.g., the welding torch 106), a distance between the contact tip and a workpiece (e.g., the workpiece 146), a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 may be communicatively coupled to the weld cable 126 to communicate (e.g., send/receive) data over the weld cable 126. The communications transceiver 118 may be implemented based on various types of power line communications methods and techniques. For example, the communications transceiver 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications transceiver 118 and a similar communications transceiver 119 of the wire feeder 104.

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding operation) and/or after the weld current has stopped flowing through the weld circuit (e.g., after a welding operation).

Example implementations of the communications transceiver 118 are described in U.S. Patent No. 9,012,807. The entirety of U.S. Patent No. 9,012,807 is incorporated herein by reference. However, other implementations of the communications transceiver 118 may be used.

The example wire feeder 104 also includes a communications transceiver 119, which may be similar or identical in construction and/or function as the communications transceiver 118.

The example power supply 102 includes a voltage monitor 160 and a current monitor 168. The voltage monitor 160 monitors an output voltage from the power supply 102. The output voltage may be controlled by the power conversion circuitry 110, an external voltage source, current source, and/or load, and/or any other internal or external cause of voltage. The current monitor 168 monitors an output current. While the example current monitor 168 is illustrated monitoring the output current from the power conversion circuitry 110, the current monitor 168 may be configured to monitor any currents flowing through the output terminals of the power supply 102 and/or for any particular circuits.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder control circuitry 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid-state device, and/or may be omitted when the power supply 102 is configured to control the output of welding power to the welding torch 106. The control circuitry 112 and/or the wire feeder control circuitry 134 may control the contactor 135 to close and/or open to provide power to the welding torch 106. The wire feeder 104 includes an assist motor 136 that receives control signals from the wire feeder control circuitry 134 to drive rollers 138 that rotate to pull an electrode 142 (e.g., welding wire) off a spool 140. The spool 140 may be, e.g., a spool of wire when the electrode 142 is welding wire. The spool 140 may be any mechanically-retrievable storage mechanism for the electrode 142. The electrode 142 is provided to the welding application through a torch cable 144. Likewise, the wire feeder 104 may provide the shielding gas from the cable 132 through the torch cable 144. The electrode 142, the shield gas, and the power from the weld cable 126 may be bundled together in a single one of the torch cable 144, in multiple ones of the torch cable 144, and/or individually provided to the welding torch 106.

The welding torch 106 delivers the electrode 142, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The example welding torch 106 includes a feed motor 152, which is configured to pull the electrode 142 from the wire feeder 104 to the welding torch 106 to feed the wire to a welding arc during welding operations. The feed motor 152 may be controlled to advance the electrode 142 at one or more wire feed speeds. The feed motor 152 may also be controlled to hold the electrode 142 in a stopped condition. When controlled to hold the electrode 142 in a stopped condition, the feed motor 152 is controlled to neither advance nor retract the electrode 142 relative to the feed motor 152. Rather, when controlled to hold the electrode 142 in the stopped condition, the feed motor 152 is controlled to hold the electrode 142 in place relative to the feed motor 152. Changing wire speeds may be used in some welding processes to reduce spatter and/or achieve desired welding results.

The assist motor 136 may operate as an assist motor to pull the electrode 142 from the spool 140 and feed the electrode 142 toward the welding torch 106, while the example feed motor 152 advances the electrode 142 and/or holds the electrode 142 in a stopped condition to control short circuiting and/or arc length during welding. In examples, either or both the feed motor 152 and/or the assist motor 136 are not capable of retracting the electrode 142. In other examples, either or both of the feed motor 152 and/or the assist motor 136 are capable of retracting the electrode 142. In some examples, the welding torch 106 does not include the feed motor 152. In some examples, the wire feeder 104 does not include the assist motor 136.

In the example of FIG. 1, the welding torch 106 includes one or more operable inputs 156 positioned on the welding torch 106. Each of the operable inputs 156 may include any, some, or all of a physical device (e.g., a button, trigger, switch, a slider, etc.), a graphic on a user interface, or another actuate-able tool which may be actuated via one or more actions to provide one or more signals to control or otherwise provide information to any, some, or all of the control circuitry 112, the wire feeder control circuitry 134, and/or other control circuitry via, e.g., the torch cable 144.

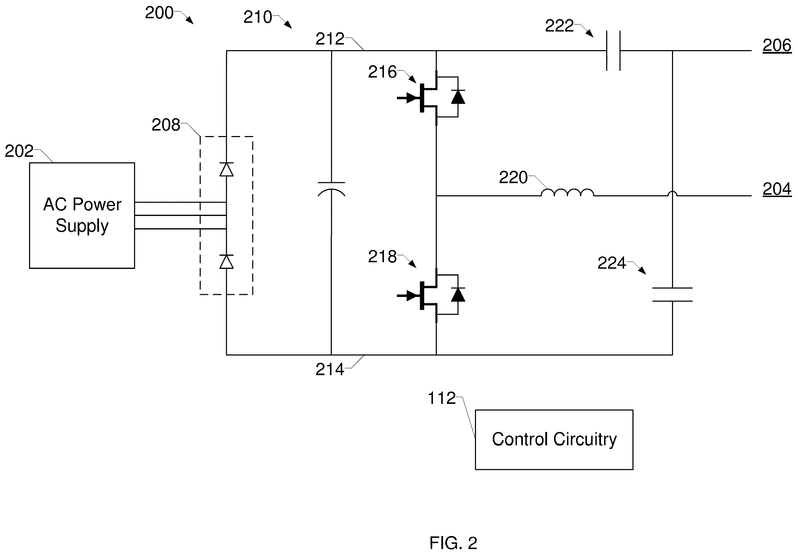

FIG. 2 is a schematic diagram of an example polarity-reversing buck converter 200, which may be used to implement the power conversion circuitry 110 of FIG. 1. The power conversion circuitry 110 may include elements, stages, and/or components in addition to the polarity-reversing buck converter 200.

The example buck converter 200 of FIG. 2 receives power from an input power source 202 and outputs DC power via first and second welding-type output terminals 204, 206. The example first and second welding-type output terminals 204, 206 may include output studs or connectors, to which welding-type equipment (e.g., the torch 106 of FIG. 1, the wire feeder 104, the work cable 148, etc.) can be connected to establish a weld circuit.

In the example of FIG. 2, the input power source 202 is a three-phase AC power source which is converted to DC power via a rectifier stage 208. For example, the input power source 202 may be an engine-driven generator, three-phase mains power, and/or any other input AC source. In other examples, the input power source 202 may be a single-phase AC power source or one or more DC power sources, in which the rectifier stage 208 may be modified or omitted, as appropriate. For example, the input power source 202 may be provided by an energy storage device such as a battery, an ultracapacitor, a supercapacitor, and/or any other type of electrical energy storage device.

The example rectifier stage 208 may be a passive rectifier or an active rectifier. For example, the rectifier stage 208 may include switches controlled by the control circuitry 112 and a boost converter

The example buck converter 200 further includes a DC bus 210. The DC bus 210 includes a first bus node 212 having a first DC voltage with respect to a second bus node 214 of the DC bus 210. The rectifier stage 208 outputs the first DC voltage to the DC bus 210 (e.g., to the bus nodes 212, 214).

The buck converter 200 includes first and second switching devices 216, 218 and an inductor 220, which are controlled to perform power conversion (e.g., voltage step-down conversion) from the DC bus 210 to the output terminals 204, 206. The first switching device 216 selectively couples the first welding-type output terminal 204 to the first bus node 212, and the second switching device 218 selectively couples the first welding-type output terminal 204 to the second bus node 214. The first and second switching devices 216, 218 may be implemented using, for example, MOSFET transistors having a body diode or other reverse conduction path, JFET transistors, IGBT transistors, and/or any other appropriate type of controllable switching device. Depending on the type of the switching devices 216, 218, the example buck converter 200 may be controlled in a synchronous rectification mode.

The buck converter 200 further includes third and fourth switching devices 222, 224. The third switching device 222 selectively couples the second output terminal 206 to the first bus node 212, and the fourth switching device 224 selectively couples the second output terminal 206 to the second bus node 214. The third and fourth switching devices 222, 224 may be implemented using, for example, contactors, relays, bidirectional semiconductor switches, and/or mechanical switches.

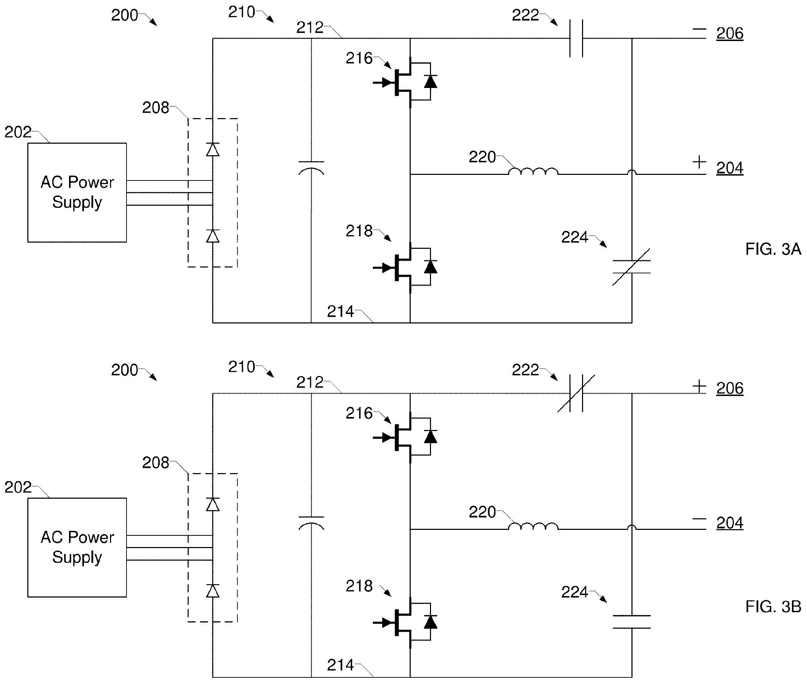

The control circuitry 112 controls the third and fourth switching devices 222, 224 to couple the second output terminal 206 to the first bus node 212 or the second bus node 214 based on the selected output polarity for the output terminals 204, 206. FIG. 3A is a schematic diagram of the example polarity-reversing buck converter 200 in a first, electrode positive (DCEP) output polarity configuration. FIG. 3B is a schematic diagram of the example polarity-reversing buck converter 200 of FIG. 2 in a second, electrode negative (DCEN) output polarity configuration.

In the example configuration of FIG. 3A, the control circuitry 112 controls the fourth switching device 224 to be closed to couple the second output terminal 206 to the second bus node 214. The control circuitry 112 also controls the third switching device 222 to be open. Based on the DCEP configuration of the buck converter 200, the example control circuitry 112 controls the first switching device 216 to drive current through the inductor 220 (e.g., to perform DC-DC conversion to convert a first DC voltage at the DC bus 210 to a second DC voltage at the output terminals 204, 206). The control circuitry 112 may further control the second switching device 218 for synchronous rectification, and/or may allow the second switching device 218 to provide freewheeling of the buck converter 200 while the first switching device 216 is controlled to be open.

In the example configuration of FIG. 3B, the control circuitry 112 controls the third switching device 222 to be closed to couple the second output terminal 206 to the first bus node 212. The control circuitry 112 also controls the fourth switching device 224 to be open. Based on the DCEN configuration of the buck converter 200, the example control circuitry 112 controls the second switching device 218 to drive current through the inductor 220, and may further control the first switching device 216 for synchronous rectification, and/or may allow the first switching device 216 to provide freewheeling of the buck converter 200 while the second switching device 218 is controlled to be open.

While the example first and second switching devices 216, 218 are controlled at the control frequency of the buck converter 200, the third and fourth switching devices 222, 224 are controlled to open and/or close, as appropriate, when the polarity is to be changed. The third and fourth switching devices 222, 224 may be normally open or normally closed devices.

In some examples, the power conversion circuitry 110 may further include a boost circuit configured to selectively convert a voltage of the DC input power from the input power supply (e.g., an energy storage device) to the target DC voltage for the DC bus 210. For example, the boost circuit may supply the target voltage to the DC bus 210, from which the buck converter stage illustrated in FIG. 2 may control the output voltage and/or output current, and control the polarity of the output provided to the output terminals 204, 206.

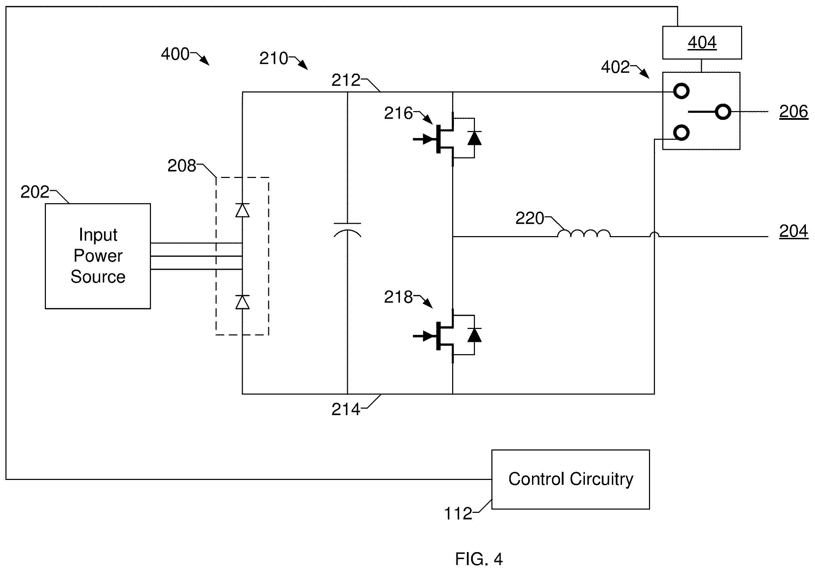

FIG. 4 is a schematic diagram of another example polarity-reversing buck converter 400, which may be used to implement the power conversion circuitry 110 of FIG. 1. The example polarity-reversing buck converter 400 is similar to the buck converter 200 of FIG. 2, and includes the input power source 202, the output terminals 204, 206, the rectifier 208, the DC bus 210 and bus nodes 212, 214, the first and second switching devices 216, 218, and the inductor 220, as described above.

In contrast with the example buck converter 200 of FIG. 2, the buck converter 400 of FIG. 4 includes a relay 402 to couple the second output terminal 206 to one of the first bus node 212 or the second bus node 214 based on the configured output polarity. The example relay 402 is a single pole, double throw relay, but may be replaced with single pole, single throw relays in an equivalent configuration.

The control circuitry 112 may control the relay 402 to couple the second terminal 206 to the second bus node 214 for a DCEP configuration. In such examples, the control circuitry 112 controls the first switching device 216 to drive current through the inductor 220 (e.g., to perform DC-DC conversion to convert a first DC voltage at the DC bus 210 to a second DC voltage at the output terminals 204, 206). The control circuitry 112 may further control the second switching device 218 for synchronous rectification, and/or may allow the second switching device 218 to provide freewheeling of the buck converter 200 while the first switching device 216 is controlled to be open.

Conversely, the control circuitry 112 may control the relay 402 to couple second terminal 206 to the first bus node 212 for a DCEN configuration. In such examples, the control circuitry 112 controls the second switching device 218 to drive current through the inductor 220 (e.g., to perform DC-DC conversion to convert a first DC voltage at the DC bus 210 to a second DC voltage at the output terminals 204, 206). The control circuitry 112 may further control the first switching device 216 for synchronous rectification, and/or may allow the first switching device 216 to provide freewheeling of the buck converter 200 while the second switching device 218 is controlled to be open.

The example relay 402 may be automatically controlled by the control circuitry 112. In other examples, the relay may be manually switched to couple the second output terminal 206 to the first bus node 212 or the second bus node 214. In such examples, the relay 402 may be coupled to a position detector 404 to detect the position of the relay 402 (e.g., to determine the manually selected polarity). Based on the position of the relay 402 detected by the position detector 404, the control circuitry 112 controls the first switching device 216 or the second switching device 218 to drive the current through the inductor 220.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A polarity reversing buck converter circuit, comprising:
   a first bus node and a second bus node, the first bus node configured to receive a first DC voltage with respect to the second bus node;
   a first output terminal and a second output terminal;
   a first switching device configured to selectively couple the first output terminal to the first bus node;
   a second switching device configured to selectively couple the first output terminal to the second bus node;
   a third switching device configured to selectively couple the second output terminal to the first bus node;
   a fourth switching device configured to selectively couple the second output terminal to the second bus node, each of the third switching device and the fourth switching device comprising a contactor, a relay, or a mechanical switch; and
   control circuitry configured to:
      control the third switching device and the fourth switching device to couple the second output terminal to one of the first bus node or the second bus node, based on a selected output polarity for the first output terminal and the second output terminal; and
      based on the selected output polarity, control the first switching device and the second switching device to perform DC-DC conversion to convert the first DC voltage to a second DC voltage and output the second DC voltage as positive or negative at the first output terminal relative to the second output terminal.
Clause 2. The polarity reversing buck converter circuit as defined in clause 1, further comprising a rectifier configured to convert an AC input to supply the first DC voltage to the DC bus.
Clause 3. The polarity reversing buck converter circuit as defined in clause 1, wherein the first switching device and the second switching device each comprise a transistor.
Clause 4. The polarity reversing buck converter circuit as defined in clause 1, further comprising an inductor coupled between the first and second switching devices and the first output terminal.
Clause 5. The polarity reversing buck converter circuit as defined in clause 1, wherein the control circuitry is configured to control the first output terminal to be a negative voltage with respect to the second output terminal by:
   controlling the third switching device to couple the second output terminal to the first bus node;
   controlling the fourth switching device to be open; and
   controlling the second switching device to drive an output of the buck converter circuit.
Clause 6. The polarity reversing buck converter circuit as defined in clause 5, wherein the control circuitry is configured to control the first switching device to provide synchronous rectification.
Clause 7. The polarity reversing buck converter circuit as defined in clause 1, wherein the control circuitry is configured to control the first output terminal to be a positive voltage with respect to the second output terminal by:
   controlling the fourth switching device to couple the second output terminal to the second bus node;
   controlling the third switching device to be open; and
   controlling the first switching device to drive an output of the buck converter circuit.
Clause 8. The polarity reversing buck converter circuit as defined in clause 7, wherein the control circuitry is configured to control the second switching device to provide synchronous rectification.
Clause 9. A welding-type power supply, comprising:
   a first welding-type output terminal and a second welding-type output terminal; and
   a polarity reversing buck converter circuit configured to convert input power to output welding-type power to the first welding-type output terminal and the second welding-type output terminal, and to control a polarity of the first welding-type output terminal with respect to the second welding-type output terminal, the buck converter circuit comprising:
      a first bus node and a second bus node, the first bus node configured to receive a first DC voltage with respect to the second bus node;
      a first switching device configured to selectively couple the first welding-type output terminal to the first bus node;
      a second switching device configured to selectively couple the first welding-type output terminal to the second bus node;
      a third switching device configured to selectively couple the second welding-type output terminal to the first bus node;
      a fourth switching device configured to selectively couple the second welding-type output terminal to the second bus node, each of the third switching device and the fourth switching device comprising a contactor, a relay, or a mechanical switch; and
      control circuitry configured to:
         control the third switching device and the fourth switching device to couple the second welding-type output terminal to one of the first bus node or the second bus node, based on a selected output polarity for the first welding-type output terminal and the second welding-type output terminal; and
         based on the selected output polarity, control the first switching device and the second switching device to perform DC-DC conversion to convert the first DC voltage to a second DC voltage and output the second DC voltage as positive or
         negative at the first welding-type output terminal relative to the second welding-type output terminal.
Clause 10. The welding-type power supply as defined in clause 9, wherein the control circuitry is configured to automatically select the polarity based on an input representative of a welding-type process.
Clause 11. The welding-type power supply as defined in clause 9, further comprising an energy storage device configured to supply DC power to the DC bus.
Clause 12. The welding-type power supply as defined in clause 11, further comprising a boost circuit configured to selectively convert a voltage of the DC power from the energy storage device to the first DC voltage.
Clause 13. The welding-type power supply as defined in clause 9, further comprising a rectifier configured to convert an AC input to supply the first DC voltage to the DC bus.
Clause 14. The welding-type power supply as defined in clause 13, wherein the rectifier is configured to receive the AC input from a single-phase or three-phase mains supply.
Clause 15. The welding-type power supply as defined in clause 13, further comprising an engine and a generator configured to supply the AC input to the rectifier.
Clause 16. The welding-type power supply as defined in clause 9, wherein the control circuitry is configured to control the first welding-type output terminal to be a positive voltage with respect to the second welding-type output terminal by:
   controlling the fourth switching device to couple the second welding-type output terminal to the second bus node;
   controlling the third switching device to be open; and
   controlling the first switching device to drive an output of the buck converter circuit.
Clause 17. The welding-type power supply as defined in clause 9, wherein the control circuitry is configured to control the first welding-type output terminal to be a negative voltage with respect to the second welding-type output terminal by:
   controlling the third switching device to couple the second output terminal to the first bus node;
   controlling the fourth switching device to be open; and
   controlling the second switching device to drive an output of the buck converter circuit.
Clause 18. The welding-type power supply as defined in clause 9, wherein the first switching device and the second switching device each comprise a transistor.
Clause 19. The welding-type power supply as defined in clause 9, wherein the third switching device and the fourth switching device each comprise a contactor.
Clause 20. A polarity reversing buck converter circuit, comprising:
   a first bus node and a second bus node, the first bus node configured to receive a first DC voltage with respect to the second bus node;
   a first output terminal and a second output terminal;
   a first switching device configured to selectively couple the first output terminal to the first bus node;
   a second switching device configured to selectively couple the first output terminal to the second bus node;
   a relay configured to selectively couple the second output terminal to the first bus node or the second bus node; and
   control circuitry configured to:
      control the relay to couple the second output terminal to one of the first bus node or the second bus node, based on a selected output polarity for the first output terminal and the second output terminal; and
      based on the selected output polarity, control the first switching device and the second switching device to perform DC-DC conversion to convert the first DC voltage to a second DC voltage and output the second DC voltage as positive or negative at the first output terminal relative to the second welding-type output terminal.

## Claims

1. A polarity reversing buck converter circuit, comprising:
a first bus node and a second bus node, the first bus node configured to receive a first DC voltage with respect to the second bus node;
a first output terminal and a second output terminal;
a first switching device configured to selectively couple the first output terminal to the first bus node;
a second switching device configured to selectively couple the first output terminal to the second bus node;
a third switching device configured to selectively couple the second output terminal to the first bus node;
a fourth switching device configured to selectively couple the second output terminal to the second bus node, each of the third switching device and the fourth switching device comprising a contactor, a relay, or a mechanical switch; and
control circuitry configured to:
control the third switching device and the fourth switching device to couple the second output terminal to one of the first bus node or the second bus node, based on a selected output polarity for the first output terminal and the second output terminal; and
based on the selected output polarity, control the first switching device and the second switching device to perform DC-DC conversion to convert the first DC voltage to a second DC voltage and output the second DC voltage as positive or negative at the first output terminal relative to the second output terminal.

2. The polarity reversing buck converter circuit as defined in claim 1, further comprising a rectifier configured to convert an AC input to supply the first DC voltage to the DC bus.

3. The polarity reversing buck converter circuit as defined in claim 1, wherein the first switching device and the second switching device each comprise a transistor.

4. The polarity reversing buck converter circuit as defined in claim 1, further comprising an inductor coupled between the first and second switching devices and the first output terminal.

5. The polarity reversing buck converter circuit as defined in claim 1, wherein the control circuitry is configured to control the first output terminal to be a negative voltage with respect to the second output terminal by:
controlling the third switching device to couple the second output terminal to the first bus node;
controlling the fourth switching device to be open; and
controlling the second switching device to drive an output of the buck converter circuit.

6. The polarity reversing buck converter circuit as defined in claim 5, wherein the control circuitry is configured to control the first switching device to provide synchronous rectification.

7. The polarity reversing buck converter circuit as defined in claim 1, wherein the control circuitry is configured to control the first output terminal to be a positive voltage with respect to the second output terminal by:
controlling the fourth switching device to couple the second output terminal to the second bus node;
controlling the third switching device to be open; and
controlling the first switching device to drive an output of the buck converter circuit.

8. The polarity reversing buck converter circuit as defined in claim 7, wherein the control circuitry is configured to control the second switching device to provide synchronous rectification.

9. A welding-type power supply, comprising:
a first welding-type output terminal and a second welding-type output terminal; and
a polarity reversing buck converter circuit configured to convert input power to output welding-type power to the first welding-type output terminal and the second welding-type output terminal, and to control a polarity of the first welding-type output terminal with respect to the second welding-type output terminal, the buck converter circuit comprising:
a first bus node and a second bus node, the first bus node configured to receive a first DC voltage with respect to the second bus node;
a first switching device configured to selectively couple the first welding-type output terminal to the first bus node;
a second switching device configured to selectively couple the first welding-type output terminal to the second bus node;
a third switching device configured to selectively couple the second welding-type output terminal to the first bus node;
a fourth switching device configured to selectively couple the second welding-type output terminal to the second bus node, each of the third switching device and the fourth switching device comprising a contactor, a relay, or a mechanical switch; and
control circuitry configured to:
control the third switching device and the fourth switching device to couple the second welding-type output terminal to one of the first bus node or the second bus node, based on a selected output polarity for the first welding-type output terminal and the second welding-type output terminal; and
based on the selected output polarity, control the first switching device and the second switching device to perform DC-DC conversion to convert the first DC voltage to a second DC voltage and output the second DC voltage as positive or negative at the first welding-type output terminal relative to the second welding-type output terminal.

10. The welding-type power supply as defined in claim 9, wherein the control circuitry is configured to automatically select the polarity based on an input representative of a welding-type process, or wherein the welding-type power supply further comprising an energy storage device configured to supply DC power to the DC bus, and optionally wherein the welding-type power supply further comprises a boost circuit configured to selectively convert a voltage of the DC power from the energy storage device to the first DC voltage.

11. The welding-type power supply as defined in claim 9, further comprising a rectifier configured to convert an AC input to supply the first DC voltage to the DC bus.

12. The welding-type power supply as defined in claim 11, wherein the rectifier is configured to receive the AC input from a single-phase or three-phase mains supply, or
wherein the welding-type power supply further comprising an engine and a generator configured to supply the AC input to the rectifier.

13. The welding-type power supply as defined in claim 9, wherein the control circuitry is configured to control the first welding-type output terminal to be a positive voltage with respect to the second welding-type output terminal by:
controlling the fourth switching device to couple the second welding-type output terminal to the second bus node;
controlling the third switching device to be open; and
controlling the first switching device to drive an output of the buck converter circuit, or wherein the control circuitry is configured to control the first welding-type output terminal to be a negative voltage with respect to the second welding-type output terminal by:
controlling the third switching device to couple the second output terminal to the first bus node;
controlling the fourth switching device to be open; and
controlling the second switching device to drive an output of the buck converter circuit.

14. The welding-type power supply as defined in claim 9, wherein the first switching device and the second switching device each comprise a transistor or
wherein the third switching device and the fourth switching device each comprise a contactor.

15. A polarity reversing buck converter circuit, comprising:
a first bus node and a second bus node, the first bus node configured to receive a first DC voltage with respect to the second bus node;
a first output terminal and a second output terminal;
a first switching device configured to selectively couple the first output terminal to the first bus node;
a second switching device configured to selectively couple the first output terminal to the second bus node;
a relay configured to selectively couple the second output terminal to the first bus node or the second bus node; and
control circuitry configured to:
control the relay to couple the second output terminal to one of the first bus node or the second bus node, based on a selected output polarity for the first output terminal and the second output terminal; and
based on the selected output polarity, control the first switching device and the second switching device to perform DC-DC conversion to convert the first DC voltage to a second DC voltage and output the second DC voltage as positive or negative at the first output terminal relative to the second welding-type output terminal.
